Europäisches Patentamt

European Patent Office

Office européen des brevets

(19)

(11) **EP 1 211 596 A1**

(12) **EUROPEAN PATENT APPLICATION**

(43) Date of publication:
05.06.2002 Bulletin 2002/23

(51) Int Cl.$^7$: **G06F 9/445**

(21) Application number: 00410147.3

(22) Date of filing: 30.11.2000

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Hewlett-Packard Company,<br>A Delaware Corporation**<br>**Palo Alto, CA 94304 (US)** | (72) Inventor: **Brebner, Gavin**<br>**38410 St Martin d'Uriage (FR)**<br><br>(74) Representative: **Lloyd, Richard Graham**<br>**Intellectual Property Section,<br>Legal Department,<br>HEWLETT-PACKARD FRANCE,<br>Etablissement de Grenoble<br>38053 Grenoble Cedex 9 (FR)** |

(54) **Process and apparatus for automatically monitoring the hardware resources of a computer**

(57) A process executed into a computer for automatically monitoring the hardware resources existing in said computer (1), comprising the steps of initiating an analysis step of the software configuration existing in the machine. The monitoring agent then causes the connection to a conformity server located on an Intranet or Internet network, and elaborates a request for the purpose of launching an analysis process of the hardware configuration for checking its adequacy to the software package. In one embodiment, the evaluation of the ideal hardware configuration is performed in the conformity server which simultaneously receive, in addition to said software package representation, data representative of the hardware configuration of the machine. From that information, the conformity server derives an ideal hardware configuration for the purpose of comparing it to the actual hardware configuration, The result of the comparison is transmitted back to the monitoring agent which can then start a connection with a Internet server for the purpose of initiating a computer aided business transaction. Alternatively, the evaluation of the ideal hardware configuration is performed within the monitoring agent in the local computer.

Figure 2

EP 1 211 596 A1

**Description**

**Technical field of the invention**

The invention relates to computer systems, and more particularly to a process for automatically monitoring the hardware resources of a computer and for supervising the adequate configuration of a computer to the particular needs of a user.

**Background art**

The continuous progress of the Information Handling System (I.H.S.) and communication technology have generalised the use of computers in most areas of human activity. With a single personal computer a particular user may get access to a wide range of applications and solutions, including the access to remote information and services via the Internet Network.

A personal computer is likely to support a wide range of applications, and serve for a wide number of different uses.

Generally speaking, a computer which leaves the manufacturing line is configured in a limited fashion, including memory and data which are fitted for basic use. After the first installation, the user may wish to add new software and applications to satisfy his or her particular needs and requirements. The installation of additional software packages in the machine often increases the need for additional processing resources. New versions of originally installed software packages also typically require higher amount of processing resources.

The constant evolution of the software configuration tends to change the user's perception and appreciation of his machine. The latter becomes rapidly convinced of the limitations of the machine, and that his investment has become obsolete.

Some customers are well versed in the practice of computers and are capable of delaying the natural obsolescence of their machines. Those customers maintain their investment by upgrading their machines with additional elements and internal parts, such as the video card, the hard disk drive, the amount of RAM memory... To achieve this, they can take advantage of the substantial information available from the Internet Network, and which may help them to find the appropriate manufacturers and new product parts for their machines. Some kind of so-called intelligent agents are useful for that purpose since they permit automation, to some extent, of the transactions which the Internet network may permit. An example of an agent which facilitates such transactions can be found in US 5,877,759 assigned to Netscape Communications Corp. and entitled *Interface for user/agent interaction.* There is disclosed an user interface providing assistance to the client and which is centred on autonomous processing of whole tasks rather than sequences of commands, and the detection of contexts requiring the launch of a process. WO 98/43146 application assigned to IBM Corp., and entitled *Intelligent agent with negotiation capability and method of negotiation therewith* is another example of an improvement brought to a so-called intelligent agent.

European Patent Application number 00410004.6 (Case HP 5099036) entitled "Process and apparatus for allowing a transaction between a user and a remote server", filed on January 21, 2000 not published at the date of priority of the present application and assigned to the Assignee of the present application, is prior art under Article 53 (4) of the European Patent Convention. It discloses an agent that facilitates, upon request from the user, the upgrade of a given machine by initiating an automatic transaction with an external server, such as an accessory server. The agent particularly automates the extraction of technical information which is essential for the preparation of a well tailored offer to the user, and which is certainly not easy to gather, such as the type of the mother card, the disk drive characteristics etc... , and the transmission of such information to the accessory server for the purpose of preparing and completing an offer for transaction.

Although the techniques and tools which are evoked above provide a substantial help to the users who are concerned with the problem of maintaining and upgrading their computers when needed, it is clear, however, that the monitoring process of the computer is still manual. Most customers are simply not aware of the concrete way of monitoring their machines, which technical characteristics need to be carefully examined to ensure that the machine is properly packed with the appropriate hardware resources, and how to upgrade when such an upgrade is necessary. They only reach the conclusion that their machine is becoming slow, and that their investment is becoming obsolete.

Computer manufacturers are certainly concerned about the way their computers are appreciated by their clients, and about how the image of their products are received in the field. In addition, computer manufacturers wish to be involved in the sales of upgrade material, as this profitable business typically goes to retailers.

In order to preserve the customer satisfaction and perception of the machines which they put to the market, computer manufacturers may wish to automate in a substantial extent the monitoring of the quality of the service offered to their customers after their machine have left the manufacturing line.

It is a desire to provide an automatic mechanism that allows the monitoring of a computer, while minimising the amount of information exchanged on the network.

**Summary of the invention**

It is an object of the present invention to design a new process for continuously monitoring the configuration of the hardware resources of a computer and for determining whether a given configuration fits the particular needs of a customer and fully match the software package configuration installed in that machine.

It is another object of the present to provide an automatic transaction process for the purpose of ensuring an appropriate upgrade operation of a computer, when the latter is deemed to be necessary.

This object is solved by the present invention which is based on a monitoring agent which firstly initiates an analysing process of the software configuration which exists in the machine for the purpose of elaborating a direct representation of the software package which is installed in the computer. The monitoring agent then causes the connection to a conformity server located on an Intranet or Internet network, and elaborates a request for the purpose of launching an analysis process of the hardware configuration for checking its adequacy to the software package.

In one embodiment, the evaluation of the ideal hardware configuration is performed in the conformity server which simultaneously receive, in addition to said software package representation, data representative of the hardware configuration of the machine. From that information, the conformity server derives an ideal hardware configuration for the purpose of comparing it to the actual hardware configuration. The result of the comparison is transmitted back to the monitoring agent which can then start a connection with a Internet server for the purpose of initiating a computer aided business transaction.

In a second embodiment, the evaluation of the ideal hardware configuration is performed within the monitoring agent in the local computer. For that purpose, the monitoring agent receives, in response to said request, information representative of typical hardware configurations corresponding to different software package installations. The monitoring agent then derives from that data a description of an ideal hardware configuration which could properly handle the determined software packages configuration which is desired by the user. The monitoring agent then initiates a comprehensive analysis of the actual hardware resources that are available in the user's machine, for the purpose of elaborating a precise description of the actual hardware configuration of the user's machine. The real hardware configuration is compared to the ideal configuration which was determined by means of the conformity data received from the external conformity server, and the agent uses the result of the comparison for automatically informing the user of the conformity of the machine to the software configuration which the user wish to use in that machine.

In the second embodiment, the substantial part of the information representative of the software and hardware configuration still remains within the local computer, thus substantially increasing the security.

Preferably, the monitoring agent derives from the result of the comparison a request that may be used to initiate a connection to an external server and for entering into a transaction for upgrading the computer with additional parts or elements.

Also, the information received from the conformity server is formatted in the XML structure which is defined by the World Wide Web Consortium (W3C) and which is associated with an appropriate Document Type Definition (DTD) file.

In one embodiment, the analysis of the software package that is installed is based on the analysis of the internal registers which are handled by the operating system, and particularly the registry in the case of the Microsoft Windows ™ operating system. The analysis may also be completed by an exhaustive checking of the different types of files loaded in the machine.

Preferably, the local conformity agent handles the HTTP standard protocol and the aggregate request is a POST of the appropriate data following the well-known servlet mechanism. HTTP is attractive as it is well known by firewalls and other internet nodes, and thus can pass where other protocols may be blocked. The use of the HTTPS [RFC 2660] protocol can be alternatively used for increasing the security of the information being exchanged.

In one embodiment, the local conformity agent includes means for collecting internal parameters that are extracted from the basic information handled by the System Management Basic Input Output System (SMBIOS). This can be directly done by accessing the tables constructed in RAM by the boot code or by means of an executable file accessing the Distributed Management Interface (DMI) or Windows Management Instrumentation (WMI). By constructing a machine profile via these resources, traditionally used for corporate asset management, the local conformity agent 11 permits a comprehensive description of the hardware processing resources located into the machine, e.g. the type of the memory, the memory speed characteristics, the model of PC, and so on.

In one embodiment, the local monitoring agent is automatically launched after the installation of software in order to check the conformity of the current hardware configuration with the newly evolved software configuration which the user has installed in his computer.

Preferably, the accessory server's response is formatted in accordance with the Hypertext Markup Language (HTML) standard, and the local conformity agent directly pushes the response received into a web browser for the purpose of allowing the user to complete the transaction. This arrangement permits the agent to automatically check the conformity of the user's machine and execute the first steps of the negotiation depending on the concrete hardware configuration without involving the user. The latter however nevertheless gets control of the negotiation at the final stage when the local conformity communication agent pushes the last proposal into the web browser. The user keeps the control of the last but essential step of the transaction while all the preceding ones which require the gathering of a great number of pieces of information, can be automatically handled by the local agent.

The close interaction between the web browser and the local agent permits to reduce the size and complexity of the latter, thus facilitating its download over the internet.

## Description of the drawings

Embodiments of the invention will now be described by way of examples only, with reference to the accompanying drawings, wherein:

Figure 1 illustrates the basic architecture showing a personal computer fitted with a conformity agent for the purpose of executing the conformity process according to the present invention.

Figure 2 is a flow chart illustrating a first embodiment of the conformity process mainly executed within the conformity server.

Figure 3 is a flow chart illustrating a second embodiment of the conformity process mainly executed within the local computer.

Figure 4 is a flow chart showing the messages exchanged between monitoring agent 11, conformity server 3 and accessories server 4 in the second embodiment.

## Description of the preferred embodiments of the invention

As will be shown below, the monitoring process which is executed for checking the conformity of the computer with the user's actual needs is handled by means of a local so-called monitoring agent which may be embodied under the form of Java code for instance. In view of the small size of the latter, it is even possible to contemplate the downloading of the local agent via the internet. However, it is clear that the preferred embodiment is where the code has been loaded into the user's computer during the manufacturing process. The monitoring agent is also fitted with means for getting a connection to service providers on the Internet network, and particularly to one conformity server with a database having information therein loaded which is representative of typical configurations of machines fitted for some different software configurations. It will be shown, with that example, how easy the monitoring of the actual configuration of the user's computer can be automatically achieved, for the purpose of issuing a concrete and tailored information to the user, even if the latter is not well versed in computer technology.

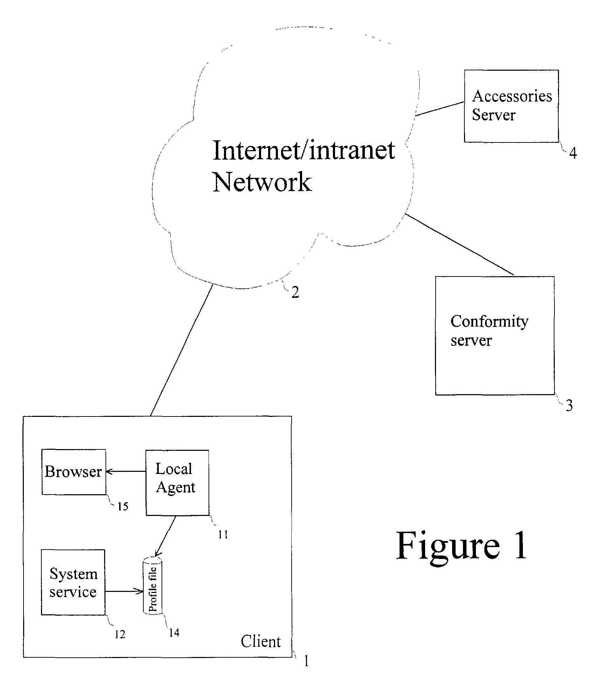

As shown in figure 1, a user's computer 1 is connected to a communication network 2, such as an Internet or Intranet network for instance. In this way, the user's computer can access a conformity server 3 including a database loaded with data for the purpose of controlling the monitoring process of the hardware resources of the computer. While the figure shows a server 3 which is distinct from the accessory server 4, it is clear that, in another embodiment, the two servers could be grouped in one single common server. Server 4 is prepared to accept and process purchasing commands for accessories and computer parts.

The user's computer 1 - or client - includes a local monitoring agent 11 used for executing a monitoring process and for polling the database loaded into conformity server 3. In the preferred embodiment, monitoring agent 11 can interact with a web browser 15. Web browser 15 is a conventional browser such as, for instance, *Internet Explorer 4* or 5 (manufactured by Microsoft Corp.) or *Netscape Explorer* (manufactured by Netscape Communications Corp. An internal system service 12 is used for automatically gathering technical parameters regarding the user's PC, and for storing them into a profile file 14 as will be described hereinafter.

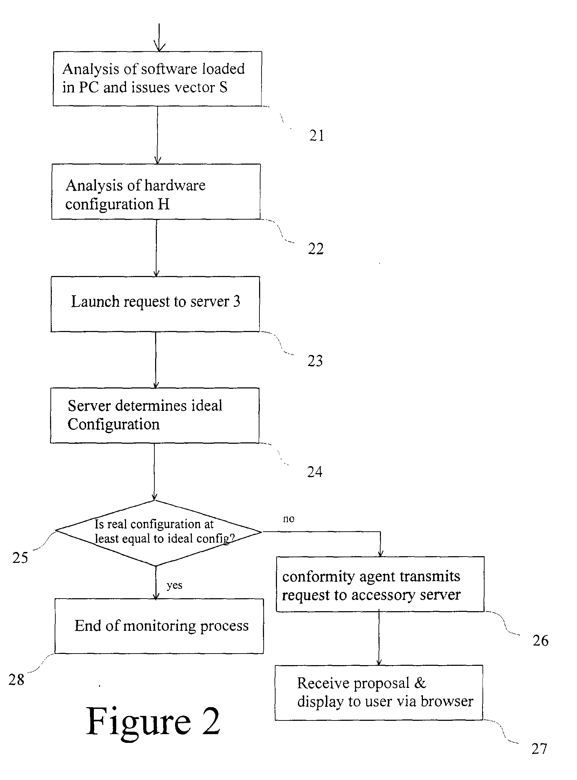

With respect to figure 2 there is shown a first embodiment of a process for monitoring the user's computer and for automatically constructing, when appropriate, an information displayed to the user for informing the latter that an upgrade operation of his computer is appropriate or even necessary.

The monitoring process is executed on user's request, that occurs for instance upon actuation of one predetermined key, or when the user clicks on an icon. In the preferred embodiment of the invention, the monitoring process is executed at regular intervals, and particularly after the installation process of a new software in the machine.

The first embodiment starts with a step 21 where the software packages installed in the machine are analysed. Different mechanisms may be used for that purpose. Preferably, the monitoring agent examines the contents of the internal registers which are handled by the operating system, for instance the registry in the case of the Microsoft Windows™ operating system. This leads to a first description of the software package existing into the machine. That description may be enhanced by means of an additional analysis of the file types existing in the particular machine being considered, and the mapping of the latter to a list of software packages which are likely to be installed.

When step 21 completes, the monitoring agent 11 issue a clear representation - under the form of a simple list, or a "S vector" for instance - of the software packages which are actually installed into the machine.

In addition, hardware data is extracted from the machine in a step 22. In one particular embodiment of the invention, System service 12 maintains a profile on the machine, constructed using a piece of software - a so called *sysinfo.exe* executable file - which is launched for accessing internal technical parameters which are loaded into the BIOS layer. The *sysinfo.exe* file will normally be installed into the user's computer at the same time as the monitoring agent, and will be executing when that agent starts, e.g. when the machine boots. In the case of a monitoring agent that is downloaded from the Internet network, for instance under the form of a Java applet, the execution of the latter will first result in the installation of the *sysinfo.exe* application for the purpose of gathering the internal parameter of the user's computer. As known by the skilled man, the use of Java applets in this manner requires them to be signed, and for the user to explicitly give permission for the applet to go outside the "sandbox". Because of this, an applet approach, while possible, is not the preferred implementation.

Once installed, the *sysinfo.exe* executable file extracts system information directly from the SMBIOS tables, or interrogates the Distributed Management Interface (DMI, or Windows Management Instrumentation (WMI) as known from Microsoft. As known by the skilled man, the DMI interface is an Application Programming Interface (API) that consists of a set of routines that are called for accessing the information stored within the BIOS layer. Basic information relating to the DMI programming interface can be found at the address http://www.dmtf.org/spec/html.

By using the DMI or WMI interfaces, or by accessing directly the SMBIOS level, the *sysinfo.exe* executable file accesses the different tables contained in the System Management BIOS (SMBIOS) for the purpose of reporting comprehensive information regarding the user's preferred software configuration, and required for completing a request for transaction. Such information includes the type of processor, the type of chipset, the number of hard disk drives, the particular graphic card being used, the serial number of the display, the reference of the operating system and so on

In step 23, local agent 11 then prepares a request for a transaction, which is then transmitted to monitoring server 3. The request includes the "S Vector" that contains the details of the PC software configuration, as well as the details of the PC hardware.

The conformity server 3 then enters into an exhaustive analysis of both the "S" vector representative of the software package and the hardware actual configuration of the machine for the purpose of checking the adequacy of the hardware configuration with the software package. Preferably, from the information contained within the "S" vector and the details of the hardware configuration, the conformity server evaluates an ideal hardware configuration of the client machine, in terms of CPU speed, memory available, harddisk space etc...

The conformity server 3 then compares, in a step 25, the real hardware representation with the ideal hardware representation that was calculated before for the purpose of determining any lack of hardware features or capacity in the actual machine configuration.

If the comparison test of step 25 shows that the actual hardware resources are superior than the ideal description which was elaborated in step 23, then a corresponding information is transmitted back to the conformity agent and the monitoring process completes and ends in a step 28.

On the contrary, if the comparison test of step 25 leads to reveal a lack in the description of the hardware resources of the actual user's configuration, then the process proceeds to step 26 where conformity server 3 transmits an information to conformity agent 11 for informing the latter of the corresponding lack of hardware resources. The latter may then prepare a request to a separate accessory server. It should be noticed that, preferably, the information which is exchanged between the conformity agent and the accessory server may advantageously conform to the Hypertext Transfer Protocol (HTTP). In the preferred embodiment, the local agent issues a request for transaction which is embedded into a HTTP GET request which is recognised at every level, and particularly by every Proxy. The particular format of the HTTP GET request is defined in the well-known rules laid down in the Request For Comments (RFC) 2.6.1.6, which are available at the following address http://www.w3.org/protocols. Since those rules are well known to the skilled man, they will not be elaborated further on. Use of the secure version of HTTP, HTTPS (RFC 2660) is an extension, which enables the protection of the users privacy by encrypting the profile information in transit.

In one embodiment, the HTTP GET request comprises a query string which is introduced by a question mark, and which details the precise description of the actual hardware resources of the user's computer, and well as the ideal configuration which were elaborate by agent 11. Considering the following example below, it is shown that query string is sent to accompany the request for purchasing memory, by means of the following HTTP GET request:

GET
accservice.hp.com/conformityneeds?memory&processor=Prototype+PII&memory=128MB& graphics=Cirrus+Logic+ 5465&disk=C%3D2GB%2CE%3D2GB%2CF%3D2GB&cdrom=CDROM32×&sound=Sound        Blaster+Compatibles&keyboard=PC%2FAT+Enhanced+Keyboard+%28101%2F102-Key%29&mouse=Microsoft+PS%2F2+Port+Mouse&os=NT+4.0&serial=012345678 HTTP/1.0
User-Agent: Java 1.2.2
Host: glubs67.grenoble.hp.com:8093
Accept: text/html, image/gif, image/jpeg, *; q=.2, */*; q=.2
Request for memory

As it appears above, the HTTP GET request's query string details information taken from the PC profile, constructed automatically using the *sysinfo.exe* executable file. Different alternatives are possible.

From the request transmitted in step 26 by monitoring agent 11, the accessory server 4 can elaborate a business proposal for the user. To achieve this, it extracts the different elements contained into the query string, with the different arguments for the purpose of elaborating a full and comprehensive proposal for transaction. That proposal may take different forms but, in one preferred embodiment, the server takes advantage of the existence of a web browser in most computers. Therefore, when the proposal has been elaborated by the Accessories server 4, the latter is embodied into a Hypertext Markup Language (HTML) page that comprises all the elements of the transaction proposal.

That HTML page is received by the local monitoring agent 11, in step 27, which can then push it into the web browser 15 for the purpose of displaying it to the user. It therefore appears that the monitoring agent 11 executes a complete analysis of the actual user's configuration for the purpose of determining a possible lack of hardware resources and, when so, handles all the steps of the negotiation process that are necessary. Only when the negotiation process reaches the step where an accurate proposal can be made to the user with all the elements being determined, then the local agent uses the web browser for a manual operation from the user, so as to let the latter decide whether or not to accept the result of the negotiation process. All the preceding steps are automatically executed for the purpose of facilitating the access to the transaction. It should be understood that the interaction developed between the web browser and the local monitoring agent 11 entails a significant advantage. It permits to reduce the size, the complexity and the cost of the software code required to implement the local agent, since a web browser is generally available on any machine. The reduction in the size of the local monitoring agent 11 can even make it feasible to download the latter via an Internet network. More importantly, the use of a web browser as the user interface tool means that the user, once sending in a request, will receive the response in the same window - no new window will be opened. In addition, as the user already is within the web browser, transferring to "manual" web-browsing mode to accept a purchase, for example, is automatic.

It can be seen that, in the first embodiment described above, the analysis of the hardware resources and its adequacy to the software configuration is mainly performed within conformity server 3. That may clearly raise a security issue as that first embodiment requires the transmission of some personal user data through the network. If the user distrusts the service provider, or the security of the message in transit across the internet, this might inhibit acceptance of the use of the process by many users.

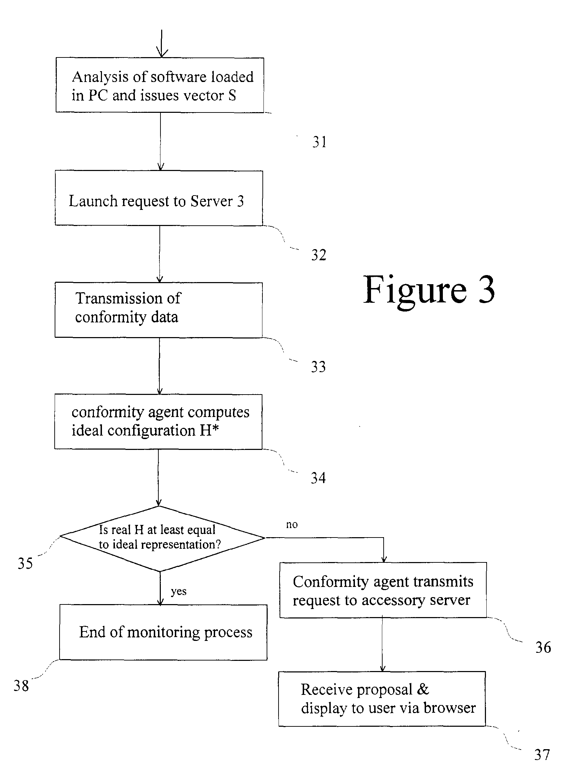

A second embodiment may be used which avoids that drawback and increases the security of the conformity process. In the second embodiment which will now be described in detail with respect to figure 3, most of the computation and analysis steps remain within the local computer.

The process starts with a software analysis step 31 identical to that of step 21 of figure 2. It should be noticed that, although this is not absolutely necessary in that second embodiment, the software analysis step 31 may be completed by an additional hardware analysis similar to that of step 22 of figure 2.

In step 32, a request is then prepared by conformity agent 11 which, in that case, only contains some harmless details of the machine which were detected in step 31, that is to say the software package representation together with, possibly, some hardware details of the hardware configuration.

In a step 33, the server returns the details required to perform the conformity analysis. Clearly, this may be achieved by an exchange of documents between client and service complying with the known XML structure and associated with a Document Type Definition (DTD) file.

In one embodiment, the data representative of typical configurations comprises information representative of the minimum technical features that are required for a given software, e.g. the particular speed of the processor, the amount of RAM memory or Video memory available in the machine. In a preferred embodiment, the information is also representative of the statistical use of different software at the same time by typical users. A typical use may be based, for instance, on the simultaneous use of both the ADOBE PHOTOSHOP ™ and the MICROSOFT OFFICE ™ pack when those two softwares are installed in the machine, and that kind of close relationship can be represented and encoded in the information received by the monitoring agent 11. This process is presented below in detail.

In one particular embodiment, the information received by the monitoring agent 11 takes the particular form of a H matrix which will be combined in a step 34 with the S vector representative of the software packages configuration computed in step 31, in a manner akin to matrix multiplication.

In the simplest case, the calculation of step 34 which will provide the ideal hardware configuration involves the following stages.

Firstly, the list of the software installed on the user's machine, is mapped onto the "S Vector" which contains a '1' indicating the presence of the application, or '0' which indicates the absence of the application. In one embodiment, this mapping action is performed by searching for keywords in the descriptive data of the software. Keyword match results in a '1' being set in the vector.

Next, this vector is combined with the "H matrix". The H matrix is formed by putting together the vector of requirements for each known software application. If for each application we store 'N; details of required CPU and memory capabilities and so on, we have a N element vector for each application. (In practice there is also a process for assigning numerical values to non-numeric items; e.g. graphics cards can be assigned a "performance value" from 1 to 10.) If there are 'M' applications that have been analysed and their requirements stored, there are M N-element vectors which can be combined in a standard fashion to form a N x M matrix. Normal matrix multiplication is used EXCEPT that rather than add the element by element products, the maximum product is taken. Thus the result is a 'N' element vector containing the ideal requirements for a machine which has the software installed. Subtracting a 'N' element vector representing the actual configuration of the user's PC gives a result where elements <= 0 indicate a need for upgrade.

As a simple example, let us consider 4 different known applications for the software package, and the cpu speed and memory size for the hardware characteristics. There is then a 4 element application vector, multiplying a 2 x 4 matrix.

$$(app1, app2, app3, app4) \cdot \begin{pmatrix} cpu1 & mem1 \\ cpu2 & mem2 \\ cpu3 & mem3 \\ cpu4 & mem4 \end{pmatrix} = (\overline{cpu} \quad \overline{mem})$$

**Equation 1 – Combination of app vector and requirements matrix.**

Where the '.' operation involves element by element multiplication followed by the taking of the maximum value, and the result is a vector of maximum values.

A more complex of this calculation allows incorporation of the dependencies between applications. For example, a user will frequently switch between a drawing application and a word-processing application, both being installed and running simultaneously on the machine. A calculation that only took into account their individual requirements would under-estimate the configuration to guarantee correct performance. A simple approach is to pre-process the application vector by performing a standard matrix multiplication by a 'M' by 'M' matrix, where as before 'M' is the number of applications we check for. This matrix will contain elements which permit the presence of combinations of applications to cause a larger weighting to the requirements. The equation below illustrates this with an identity matrix being shown - which would result in exactly the same calculation as the original case. However, by modifying the elements of this matrix, it is possible to reflect dependencies between the applications.

$$\left[ (app1, app2, app3, app4) \begin{pmatrix} 1&0&0&0 \\ 0&1&0&0 \\ 0&0&1&0 \\ 0&0&0&1 \end{pmatrix} \right] \begin{pmatrix} cpu1 & mem1 \\ cpu2 & mem2 \\ cpu3 & mem3 \\ cpu4 & mem4 \end{pmatrix} = (\overline{cpu} \quad \overline{mem})$$

**Equation 2 - Calculation with dependency matrix added.**

As an example, a numerical example is shown below where only app1 and app3 are to be found on the PC, but where there is a likelihood of their being used together, reflected in a increased weighting of the final requirements result.

$$\left[ \begin{pmatrix} 1 & 0 & 1 & 0 \end{pmatrix} \begin{pmatrix} 1 & 0 & .5 & 0 \\ 0 & 1 & 0 & 0 \\ .5 & 0 & 1 & 0 \\ 0 & 0 & 0 & 1 \end{pmatrix} \right] \begin{pmatrix} 300 & 64 \\ 300 & 64 \\ 300 & 64 \\ 300 & 64 \end{pmatrix}$$

$$= \begin{pmatrix} 1.5 & 0 & 1.5 & 0 \end{pmatrix} \begin{pmatrix} 300 & 64 \\ 300 & 64 \\ 300 & 64 \\ 300 & 64 \end{pmatrix} = \begin{pmatrix} 450 & 96 \end{pmatrix}$$

Equation 3 - example calculation

In Equation 3, the dependency matrix is used for all the configuration elements being considered. As will be evident, an alternative is to use a different dependency matrix for each of the configuration elements (CPU, memory and so on) resulting in a set of vector to vector combinations rather than a single vector to matrix operation.

At the end of step 34, an ideal configuration, for instance under the form of a H* vector is available.

If the hardware configuration has not yet been detected at that point, the latter is analysed in a similar manner than that of step 22 of figure 2 and the resulting representation is then compared, in a step 35, to the ideal H* hardware representation calculated in step 33.

The result of the comparison may reveal sufficient hardware resources in the machine configuration and, in that case, the process completes in a step 38.

However, if the comparison step 35 reveals a lack of hardware resources in the machine configuration, then the process proceeds to step 36 where monitoring agent 11 informs the user of the corresponding lack of hardware resources. As for step 26 of figure 2, the monitoring agent 11 may transmit a corresponding request to accessory server 4 via the Hypertext Transfer Protocol (HTTP), for instance by means of a HTTP GET request as described above. The HTTP get comprises, as for step 26 of figure 2, a query string and introduced by a question mark, and which details the precise description of the actual hardware resources of the user's computer, and well as the ideal configuration which were elaborate by agent 11.

From the request transmitted in step 36 by monitoring agent 11, the accessory server 4 can elaborate an appropriate proposal for hardware features upgrade. That HTML page is received by the local monitoring agent 11, in step 37, which can then push it into the web browser 15 for the purpose of displaying it to the user.

It can be seen that, in the second embodiment, the security of the process is increased since it is the monitoring agent 11 which executes a complete analysis of the actual user's configuration within the local machine, and, if appropriate, handles all the next steps involved in the negotiation process. Only when that negotiation reaches the step where an accurate proposal can be made to the user with all the elements being determined, then the local agent uses the web browser for a manual operation from the user, so as to let the latter decide whether or not to accept the result of the negotiation process. All the preceding steps are automatically executed for the purpose of facilitating the access to the transaction. It should be understood that the interaction developed between the web browser and the local monitoring agent 11 entails a significant advantage. It permits to reduce the size, the complexity and the cost of the software code required to implement the local agent, since a web browser is generally available on any machine. The reduction in the size of the local monitoring agent 11 can even make it feasible to download the latter via an Internet network. More importantly, the use of a web browser as the user interface tool means that the user, once sending in a request, will receive the response in the same window - no new window will be opened. In addition, as the user already is within the web browser, transferring to "manual" web-browsing mode to accept a purchase, for example, is automatic.

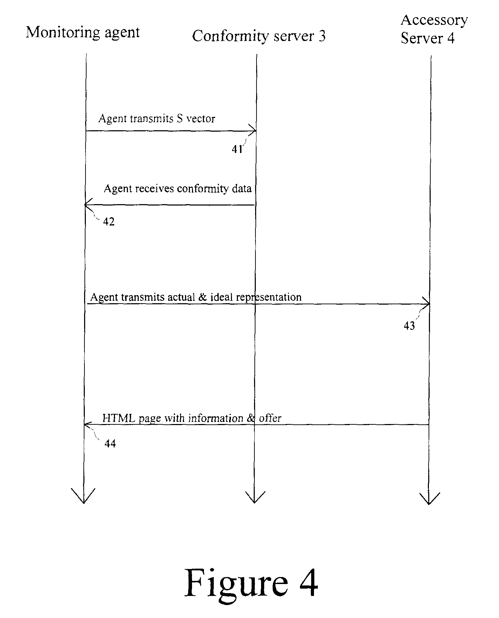

Figure 4 illustrates the different messages that are exchanged during the monitoring process between the agent and the servers 3 and 4. When the agent has completed the software package configuration analysis of step 31, the latter elaborates a request which is transmitted to conformity server 3, as referenced by arrow 41. The conformity server 3 then answers with message 42 which provides data representative to typical hardware configuration appropriate to some software package installations. In one preferred embodiment, the data posted by conformity server 3 contains a matricial information which can be used and applied to Software vector S for the purpose of computing and deriving ideal configuration vector H.

In message 43, the monitoring agent aggregates ideal H vector with the real vector H determined during step 34 and posted that information to accessory server 4. The latter can then process the request and transmits a contextual response in an HTML format, as illustrated by arrow 44. Local monitoring agent 11 can then push the HTML response to the web browser, for the purpose of completing the transaction.

In a second embodiment, the monitoring agent 11 includes a means for regularly downloading from server 3 a list of the different accessories servers which can be used for the purpose of transmitting message 43 as explained above. Preferably, the list of the accessories servers can be downloaded at the same time than the conformity data received during step 33, and will comply with the known XML structure so that a single set of data posted by the server 3 can be used for both the computation of the ideal hardware resources vector H and the determination of the appropriate accessories servers to which the monitoring agent 11 will have to post the transaction request..

**Claims**

1. Process for automatically monitoring the hardware resources of a computer (1), comprising the steps of:

   - initiating a monitoring agent (11) for analysing (21) the software packages installed into said computer and for elaborating a direct representation of said analysis;
   - initiating a connection to a conformity server (3) connected to an Internet or Intranet network for transmitting said direct representation of the software package, together with data representative of the actual hardware configuration of said computer;
   - elaborating in said conformity server an ideal hardware configuration and comparing said ideal configuration to said actual configuration;
   - in response to said comparison, transmitting information to said monitoring agent (11) so that the latter can initiate a business transaction with an external server.

2. Process executed in a computer for automatically monitoring the hardware resources existing in said computer (1), comprising the steps of:

   - initiating an monitoring agent (11) for the purpose of analysing the software package which are installed into said computer and for elaborating a direct representation of said analysis ;
   - initiating a connection to a conformity server (3) connected to an Internet or Intranet network for the purpose of receiving data representative of typical hardware configurations and for deriving an ideal hardware configuration;
   - initiating a determination of the actual hardware resources for the purpose of a comparison to said ideal hardware configuration;
   - informing when necessary the user of the lack of hardware resources reported by said determination step.

3. Process according to claim 1 or 2 wherein said monitoring agent connects to an accessory server (4) and transmits a request containing information representative of the actual and ideal hardware resources to an external accessory server for the purpose of preparing and completing a transaction.

4. Process according to claim 3 wherein the information received from the conformity server is formatted in the XML Extended Markup Language which is associated to Document Type Definition (DTD) file

5. Process according to claim 4 **characterised in that** the operating system is a Windows type operating system and that the analysis of the software packages configuration is based on an analysis of the registry.

6. Process according to claim 5 **characterised in that** the analysis of the software packages configuration is based upon the systematic research of the file types which are loaded onto the hard disk drive.

7. Process according to claim 1 or 2 **characterised in that** said request transmitted to said conformity server (3) conforms to the Hypertext Transfer Protocol (HTTP), and contains a query string containing information representative of the type or model of the computer.

8. Process according to claim 3 **characterised in that** said request transmitted to said accessory server (4) conforms to the Hypertext Transfer Protocol (HTTP), and contains a query string containing information extracted from a local profile and representative of the actual hardware resources.

9. Process according to claim 8 wherein said local profile contains profile data that are representative of platform configuration, and are extracted from information available at the Basic Input Output System (BIOS) level.

10. Process according to claim 8 wherein said profile data are collected by means of interrogation of standardised systems management interfaces present in the client computer.

11. Process according to claim 8 wherein said profile parameters are collected by means of an interrogation via the Distributed Management Interface (DMI) or Window Management Interface (WMI).

12. Process according to claim 8 wherein said monitoring agent (11) receives the response from said accessory server (4) under the form of a Hypertext Markup Language (HTML) page, and pushes it to a web browser for allowing the completion of the transaction between the user and the server.

13. Process according to claim 3 **characterised in that** the conformity server posts a list of accessory servers to which the request transmitted by said agent can be mapped thereby permitting modification of the offers that can be made to the user.

14. Process according to claim 1 or 2 **characterised in that** said monitoring agent is downloaded from said conformity server (3).

15. Process according to claim 3 wherein said conformity server (3) and said accessories servers are grouped in order to form an unique server to which said monitoring agent can post request.

16. A transaction aid for assisting a transaction between an user and at least one remote server (3, 4), the or each said remote server being prepared to process at least one predetermined command, said transaction aid comprising program code elements for carrying a method as claimed in any preceding claim.

17. A transaction aid as claimed in claim 16 in the form of a personal computer, the program code elements being implemented as a local agent for execution on the computer.

18. A transaction aid as claimed in claim 16 wherein the local agent is preloaded and arranged to execute when the computer is booted.

19. A transaction aid computer program product having program code elements for carrying out a method as claimed in any of claims 1 to 14.

20. A computer program product as claimed in claim 19 in the form of an agent.

Internet/intranet
Network

Accessories
Server

4

2

Conformity
server

3

Browser

15

Local
Agent

11

System
service

12

Profile file

14

Client

1

# Figure 1

Analysis of software loaded
in PC and issues vector S

21

Analysis of hardware
configuration H

22

Launch request to server 3

23

Server determines ideal
Configuration

24

Is real configuration at
least equal to ideal config?

25

no

conformity agent transmits
request to accessory server

26

yes

End of monitoring process

28

Receive proposal &
display to user via browser

27

# Figure 2

Analysis of software loaded
in PC and issues vector S

31

Launch request to Server 3

32

# Figure 3

Transmission of
conformity data

33

conformity agent computes
ideal configuration H*

34

Is real H at least equal
to ideal representation?          no

35

yes

Conformity agent transmits
request to accessory server

End of monitoring process

36

38

Receive proposal &
display to user via browser

37

Monitoring agent        Conformity server 3        Accessory
                                                   Server 4

Agent transmits S vector

41

Agent receives conformity data

42

Agent transmits actual & ideal representation

43

HTML page with information & offer

44

# Figure 4

**European Patent Office**

## EUROPEAN SEARCH REPORT

Application Number

EP 00 41 0147

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 867 714 A (TERRELL MICHAEL R ET AL) 2 February 1999 (1999-02-02) * column 6, line 42 - column 14, line 64 * | 1,2,16, 17,19,20 | G06F9/445 |
| Y | | 18 | |
| Y | US 5 564 054 A (BRAMNICK ARNOLD H ET AL) 8 October 1996 (1996-10-08) * column 5, line 46 - line 55 * | 18 | |
| A | US 5 835 734 A (ALKALAJ LEON ET AL) 10 November 1998 (1998-11-10) * column 6, line 40 - column 7, line 5 * | 1-20 | |
| A | WO 00 13121 A (UNIVERSE COMMUNICATIONS INC) 9 March 2000 (2000-03-09) * abstract * * figures 1,2 * | 1-20 | |

| | |
|---|---|
| | TECHNICAL FIELDS SEARCHED (Int.Cl.7) |
| | G06F |

The present search report has been drawn up for all claims

| Place of search | Date of completion of the search | Examiner |
|---|---|---|
| THE HAGUE | 16 May 2001 | Bijn, K |

**ANNEX TO THE EUROPEAN SEARCH REPORT
ON EUROPEAN PATENT APPLICATION NO.** EP 00 41 0147

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2001

| Patent document cited in search report | | Publication date | Patent family member(s) | | Publication date |
|---|---|---|---|---|---|
| US 5867714 | A | 02-02-1999 | NONE | | |
| US 5564054 | A | 08-10-1996 | NONE | | |
| US 5835734 | A | 10-11-1998 | NONE | | |
| WO 0013121 | A | 09-03-2000 | AU | 4013600 A | 09-10-2000 |
| | | | AU | 5791499 A | 21-03-2000 |
| | | | WO | 0057327 A | 28-09-2000 |

EPO FORM P0459

For more details about this annex : see Official Journal of the European Patent Office, No. 12/82